# FASCICULE DE BREVET EUROPEEN

(11) **EP 4 297 570 B1**
(45) Date de publication et mention de la délivrance du brevet: **25.06.2025**
(21) Numéro de dépôt: 22706867.3
(22) Date de dépôt: 22.02.2022
(51) Int. Cl.: A01M 23/30, A01M 23/24

(54) **PIÈGE POUR ANIMAUX NUISIBLES À ARMEMENT AUTOMATIQUE ET À DISTANCE**
SICH SELBST SPANNENDE UND FERNGESTEUERTE SCHÄDLINGSFALLE
AUTOMATICALLY AND REMOTELY ARMED PEST TRAP

(30) Priorité: 25.02.2021 BE 202105131
(43) Date de publication de la demande: 03.01.2024
(73) Titulaire: Frojmovics, Abraham, 1180 Bruxelles (BE)
(72) Inventeur: FROJMOVICS, Abraham, 1180 Bruxelles (BE)
(74) Mandataire: Kirkpatrick
(86) Numéro de dépôt international: PCT/EP2022/054431
(87) Numéro de publication internationale: WO 2022/180052

(56) Documents cités:
- EP-A1- 3 378 309
- WO-A1-2017/188828
- US-A- 1 059 114
- US-A- 2 599 541
- US-A- 4 483 094
- US-A1- 2019 150 425

## Description

### Domaine de l'invention

L'invention concerne un piège pour animaux nuisibles (tels que les rongeurs) dont l'armement est réalisé automatiquement et à distance.

### Etat de la technique

Dans la lutte contre les nuisibles à l'aide de piège individuels, il est nécessaire d'inspecter régulièrement l'état des pièges disposés à différents endroits à l'intérieur ou à l'extérieur d'un bâtiment afin de contrôler si des animaux nuisibles y ont capturés ou non. Après le déclenchement du piège, indépendamment de la capture ou non d'un nuisible, il est nécessaire de le réarmer manuellement, afin qu'il soit en état de fonctionner correctement pour la prochaine prise.

Le WO2017/188828A1 divulgue un piège comprenant un mécanisme de piège et un ensemble actionneur configuré pour remettre le mécanisme de piège dans une position prête et libérer le mécanisme de piège lors de l'activation du piège. EP3378309A1 prévoit de fournir un piège rechargeable automatique adapté à une utilisation dans un système pour détecter et prédire les infestations de rats et de souris.

A ces fins, on connaît dans l'état de la technique l'approche humaine, i.e. le passage d'un opérateur qualifié afin de réarmer les pièges. Dans le cas d'une capture d'un animal nuisible, ledit opérateur est obligé de prendre en charge le cadavre et ensuite de réarmer le piège. Le piège peut également se déclencher, sans qu'il s'y trouve un animal nuisible. Dans ce dernier cas, ledit opérateur se trouve dans l'obligation de se déplacer afin de réarmer le piège. Ces déclenchements intempestifs sont relativement courants et peuvent être provoqués soit par un animal nuisible qui déclenche le piège sans être capturé, soit par un choc imprévu quelconque, provoqué sur le piège. Par exemple par une personne dont le pied heurte le piège par inadvertance.

Il est courant à l'heure actuelle que les pièges soient connectés par voie de télécommunication à une société de service d'intervention pour la lutte contre les animaux nuisibles.

Le déclenchement « à blanc » d'un piège a comme conséquence que celui-ci n'est pas opérationnel et peut avoir des conséquences négatives sur les moyens de lutte mis en œuvre.

Le déplacement d'un intervenant à cette fin requiert un certain temps de travail, ainsi que des frais.

C'est pourquoi la demanderesse a jugé utile de développer un piège qui permet d'armer automatiquement et à distance un piège pour nuisible ainsi que la méthode associée.

### Résumé de l'invention

Le but principal de l'invention est de contrôler si un piège a été déclenché sans avoir capturé un animal nuisible, pour ensuite en informer l'utilisateur et réarmer le piège de manière automatique, c'est-à-dire sans l'intervention directe d'un opérateur.

A cette fin, l'invention concerne un piège pour animaux nuisibles comprenant :
- une plateforme de support d'une structure de capture ;
- un crochet agencé pour maintenir la structure de capture en position « armé » ;
- un levier agencé pour déplacer le crochet afin de libérer la structure de capture lors d'une pression appliquée sur ledit levier;
- un ressort agencé pour entrainer la rotation de la structure de capture autour d'un axe lorsqu'elle est libérée ;
   caractérisé par le faite que le piège comprend en outre
- un capteur de détection de l'armement ou du déclenchement du piège ;
- un capteur de détection de capture d'un nuisible quand le piège est déclenché ;
- un moteur agencé pour actionner des moyens de réarmement du piège si aucun nuisible n'est détecté dans le piège déclenché.

Le dispositif peut comprendre également un module de télécommunication autonome, ainsi qu'une d'une carte circuit imprimée, comportant entre autres une mémoire et un processeur permettant de connaitre à distance le statut du piège et/ou de contrôler le réarmement du piège.

L'invention concerne également une méthode associée à l'utilisation du piège lorsque celui-ci se déclenche sans capture d'un nuisible, la méthode comprenant les étapes suivantes :
- le capteur de détection de l'armement du piège détecte le déclenchement du piège ;
- le capteur de détection de présence d'un nuisible détecte la présence ou non d'un nuisible ;
- Si le piège est déclenché mais qu'il n'y a pas eu capture d'un nuisible, on réarme le piège automatiquement et à distance en actionnant le moteur électrique.

On mesure le déclenchement lorsque l'animal nuisible s'introduit dans le piège (état A), alternativement, on mesure le déclenchement lorsque le piège se déclenche sans capture (état B). On communique un de ces deux états vers un serveur.

La méthode peut également comprendre une étape de déchiffrage d'un de ces deux états par le serveur et une étape de déclenchement d'un événement d'alerte par lequel un objet ou une personne est contactée par télécommunication, afin de communiquer la capture d'un animal nuisible ou le déclenchement du piège avec un absence de capture.

Ensuite, on arme le piège de manière automatique, suite à l'interprétation d'un message de déclenchement du piège. L'absence d'un animal nuisible dans le piège peut être indiquée par l'enclenchement d'un interrupteur de fin de course de la partie du piège qui sert à capturer l'animal nuisible, ou par toute autre moyen adéquat indiquant l'absence de capture d'un animal nuisible. Lorsque le message indique l'absence d'un animal nuisible dans le piège, une commande est envoyée, par le serveur, ou par le programme se trouvant sur la carte électronique à un moteur afin de réarmer le piège.

A cette fin, l'axe de ce moteur est muni d'un bras qui tend le piège jusqu'à sa position finale de tension. Le piège est alors à nouveau opérationnel.

Ensuite, le moteur actionne le bras en sens inverse, pour retourner automatiquement en position basse, en attente d'un nouveau déclenchement du piège.

En cas de capture d'un animal nuisible par le piège, lorsque l'opérateur enlève l'animal nuisible du piège, celui-ci déclenche une fin de course de la partie du piège qui capture l'animal nuisible ayant comme résultat, l'enclenchement de l'interrupteur, qui démarre le moteur qui actionne l'armement du piège.

Ensuite, le moteur actionne le bras dans le sens inverse vers la position basse, en attente d'un nouveau déclenchement de piège.

La piège selon l'invention offre une autonomie importante au niveau énergétique. Par exemple par l'utilisation de batteries longue durée de type lithium, soit de batteries rechargeables, soit de super condensateurs rechargeables par des moyens mécaniques.

L'invention concerne aussi un système pour le traitement des informations. Ce traitement consiste à effectuer un lien entre le message indiquant l'absence d'animal nuisible dans le piège et le déclenchement du moteur de tension du piège.

### Description détaillée de modes de réalisations particuliers

Ces aspects ainsi que d'autres aspects de l'invention seront clarifiés dans la description de modes de réalisation particuliers de l'invention, référence étant faite aux dessins des figures, dans lesquelles :
La figure 1. représente un schéma général du piège selon l'invention lorsqu'il est armé;
La figure 2. représente un schéma général du piège selon l'invention lorsqu'un nuisible est capturé ;
La figure 3. représente un schéma général du piège selon l'invention lors d'un déclenchement à blanc.
La figure 4. représente un schéma général du piège selon l'invention lors du réarmement.

### Brève description des figures

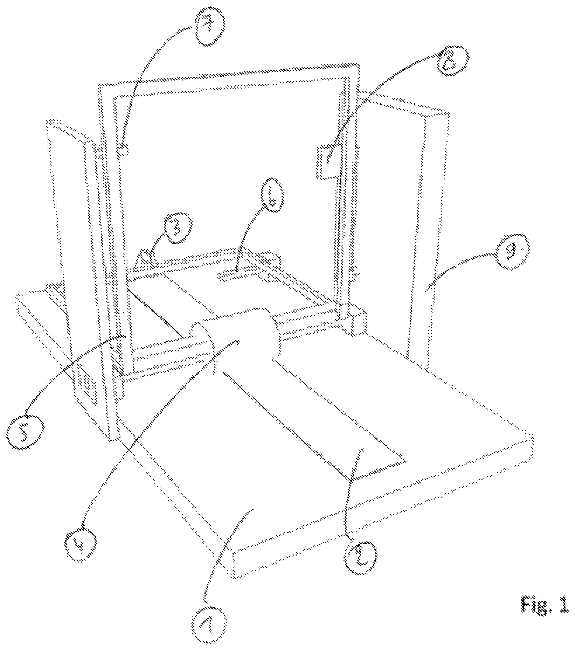

En référence à la Figure 1, la plateforme (1) est le réceptacle où vient s'engager le rongeur ; celui-ci peut être muni d'un appât afin d'attirer ce dernier. Le levier (2) descend, lorsqu'un rongeur s'engage sur la plateforme (1) et libère mécaniquement la structure de capture (5) qui descend vers la plateforme (1) afin de piéger le rongeur. Le mouvement de la structure de capture (5) est actionné par un ressort (4).

La détection d'un animal nuisible à l'aide du levier 2, qui déclenche mécaniquement un crochet 3 et qui libère la structure de capture 5 peut être effectuée à l'aide d'un interrupteur de type Reed et un aimant ou d'un interrupteur magnétique et un aimant ou d'un interrupteur de type infra rouge et une source de chaleur ou d'un interrupteur de type optique ou d'un interrupteur de type acoustique.

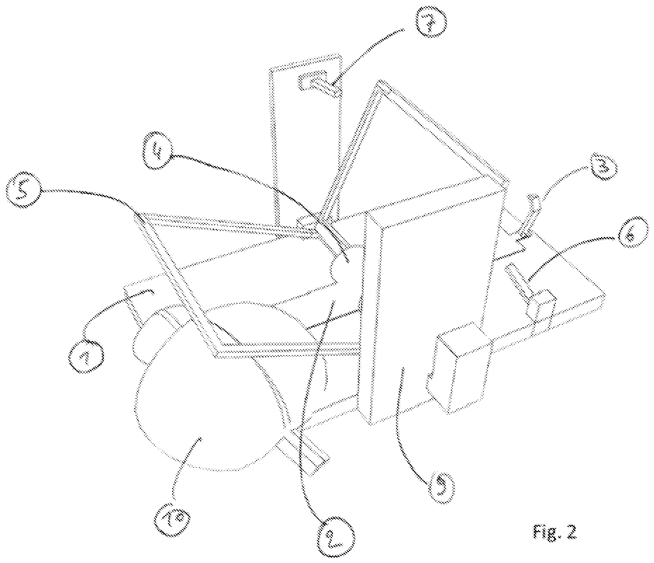

En référence à la Figure 2, le rongeur (10) s'engage sur la plateforme (1) ce qui enclenche un mouvement vertical du levier (2) qui libère la structure de capture (5) par le mouvement arrière vertical du crochet (3). La structure de capture (5) descend et est arrêté dans son mouvement descendant par la masse du rongeur (10), le cas échéant. Le levier de l'interrupteur (6) est libéré et indique une position « ON », qui communique au mini-ordinateur embarqué que la structure de capture (5) a été actionnée. Etant donné que le rongeur (10) ne permet pas à la structure de capture (5) d'achever son mouvement complet, l'interrupteur de contrôle de fin de course (7) reste en position « off », car n'étant pas enclenché par l'arrière de la structure de capture (5). Cette position « OFF » indique au mini-ordinateur embarqué qu'il y a eu une capture effective de rongeur. Lorsque la structure de capture 5 entame son mouvement, imprimé par le ressort 4, celle-ci libère le levier qui enclenche un interrupteur 6. Ceci peut être effectué à l'aide d'un interrupteur de type Reed et un aimant ou d'un interrupteur magnétique et un aimant ou d'un interrupteur de type infra rouge et une source de chaleur ou d'un interrupteur de type optique ou d'un interrupteur de type acoustique. Dans ce cas de figure, l'animal invasif est piégé dans la structure de capture et la partie arrière de cette structure, n'atteint pas l'interrupteur 7. Ceci peut être effectué à l'aide d'un interrupteur de type Reed et un aimant ou d'un interrupteur magnétique et un aimant ou d'un interrupteur de type infra rouge et une source de chaleur ou d'un interrupteur de type optique ou d'un interrupteur de type acoustique.

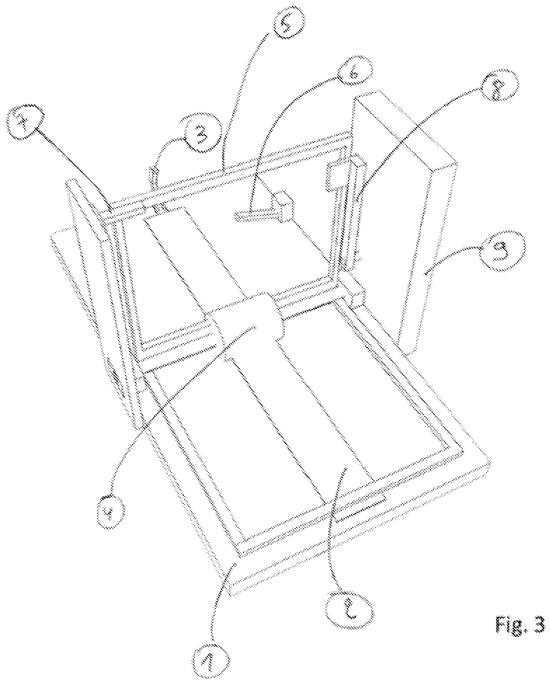

En référence à la Figure 3, lorsque par exemple par un choc intempestif au piège, ou bien un rongeur qui a heurté le levier (2) mais a pu se retirer avant que la structure de capture (5) s'abatte, la structure de capture termine sa course, c'est-à-dire qu'elle descend pour s'arrêter au niveau de la plateforme (1). Ce mouvement enclenche l'interrupteur de contrôle de fin de course (7) et le met en position « ON ». Celle-ci indique au mini-ordinateur embarqué qu'il n'y a pas eu de capture effective d'un rongeur. Dans ce cas de figure, la structure de capture 5 achève sa course, et l'arrière de cette structure enclenche l'interrupteur de contrôle de fin de course 7. Ceci peut être effectué à l'aide d'un interrupteur de type Reed et un aimant ou d'un interrupteur magnétique et un aimant ou d'un interrupteur de type infra rouge et une source de chaleur ou d'un interrupteur de type optique ou d'un interrupteur de type acoustique.

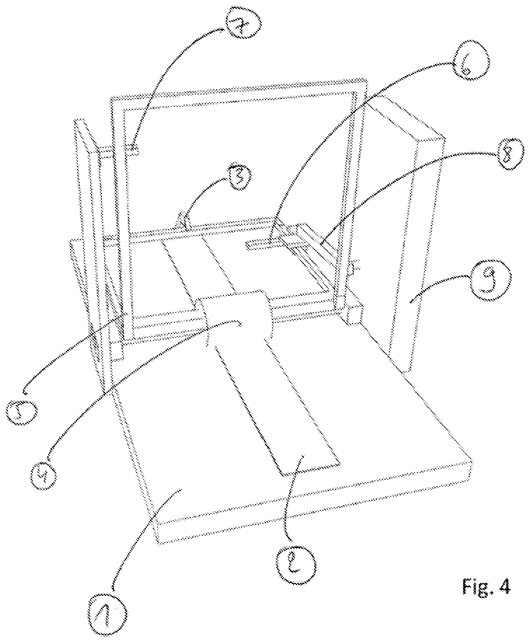

En référence à la Figure 4, lorsque le mini-ordinateur reçoit un signal « ON » de l'interrupteur 6 ainsi que signal « on » du capteur de fin de course 7, il donne une instruction au moteur 9 d'imprimer un quart de tour dans le sens inverse des aiguilles d'une montre au bras 8, afin de ramener la structure de capture en position de départ, telle qu'exposée en Figure 1. En fin de course, le crochet 3 s'accroche à l'arrière de la structure de capture 5. La fin de course est enregistrée de manière suivante : la structure de capture 5 heurte l'interrupteur 6 qui passe en position « OFF ». Celui-ci communique au mini-ordinateur la commande d'interruption du mouvement rotatif qui a été imprimé au bras 8 et reprend ensuite un sens rotatif inverse, jusqu'à reprendre sa position verticale, initiale.

Dans une réalisation particulière, le mini-ordinateur est muni d'un modem comprenant une carte SIM, qui communique les divers types de déclenchements à un serveur.

Dans une réalisation particulière, le serveur communique avec des ordinateurs qui indiquent aux utilisateurs sélectionnés, le type de déclenchement pour chaque piège connecté.

Dans une réalisation particulière, le serveur envoie un SMS vers un choix d'utilisateurs comprenant le type de déclenchement pour chaque piège connecté.

Dans une réalisation particulière, le serveur envoie un e-mail vers un choix d'utilisateurs comprenant le type de déclenchement pour chaque piège connecté.

## Revendications

1. Piège pour animaux nuisibles comprenant :
- une plateforme de support (1) d'une structure de capture (5) ;
- un crochet (3) agencé pour maintenir la structure de capture (5) en position « armé » ;
- un levier (2) agencé pour déplacer le crochet (3) afin de libérer la structure de capture (5) lors d'une pression appliquée sur ledit levier;
- un ressort (4) agencé pour entrainer la rotation de la structure de capture (5) autour d'un axe lorsqu'elle est libérée,
**caractérisé par** le faite que le piège comprend en outre
- un capteur de détection de l'armement ou du déclenchement du piège (6) ;
- un capteur de détection de capture d'un nuisible (7) si le piège est déclenché ;
- un moteur (9) agencé pour actionner des moyens de réarmement du piège si aucun nuisible n'est détecté dans le piège déclenché.

2. Piège pour animaux nuisibles selon la revendication 1, dans lequel les moyens pour réarmer le piège comprennent un bras (8) en rotation autour de l'axe du moteur agencé pour entrainer la structure de capture.

3. Piège selon l'une de revendications précédentes, dans lequel les capteurs de détection sont un ensemble d'un interrupteur de type Reed et un aimant ou d'un interrupteur magnétique et un aimant ou d'un interrupteur de type infra rouge et une source de chaleur ou d'un interrupteur de type optique ou d'un interrupteur de type acoustique.

4. Ensemble du piège selon l'une des revendications 1 à 3 et d'un terminal informatique, chacun étant muni de moyens de télécommunications pour échanger les informations de détection d'armement et de la présence de nuisibles.

5. Méthode d'utilisation du piège selon l'une des revendications 1 à 3, comprenant les étapes suivantes :
- le capteur de détection de l'armement du piège (6) détecte le déclenchement du piège ;
- le capteur de détection de présence d'un nuisible (7) détecte la présence ou non d'un nuisible ;
- Si il n'y a pas eu capture d'un nuisible, on réarme le piège automatiquement et à distance en actionnant le moteur électrique (9).

6. Méthode selon la revendication 5 d'utilisation de l'ensemble selon la revendication 4, selon laquelle on communique à l'aide d'un module de télécommunication l'état du piège, armé ou déclenché, au terminal informatique.

## Patentansprüche

1. Schädlingsfalle, umfassend:
eine Stützplattform (1) für eine Fangvorrichtung (5);
- einen Haken (3), der dazu dient, die Fangvorrichtung (5) in der "Schussposition" zu halten;
- einen Hebel (2) zum Bewegen des Hakens (3), um die Fangvorrichtung (5) bei Druck auf den Hebel freizugeben;
- eine Feder (4) zum Antreiben der Drehung der Fangvorrichtung (5) um eine Achse, wenn sie freigegeben ist,
**dadurch gekennzeichnet, dass** die Falle außerdem umfasst
- einen Sensor zum Erkennen der Scharfschaltung oder Auslösung der Falle (6);
- einen Sensor zum Erkennen des Fangs eines Schädlings (7), wenn die Falle ausgelöst wurde;
- einen Motor (9), der dazu dient, Mittel zum Zurücksetzen der Falle zu betätigen, wenn in der ausgelösten Falle kein Schädling erkannt wird.

2. Schädlingsfalle gemäß Anspruch 1, wobei die Mittel zum Wiederaufrichten der Falle einen um die Motorachse drehbaren Arm (8) umfassen, der zum Antreiben der Fangvorrichtung ausgelegt ist.

3. Falle gemäß einem der vorstehenden Ansprüche, wobei die Detektionssensoren eine Einheit aus einem Reedschalter und einem Magneten oder einem Magnetschalter und einem Infrarotschalter und einer Wärmequelle oder einem optischen Schalter oder einem akustischen Schalter sind.

4. Fallenvorrichtung gemäß einem der Ansprüche 1 bis 3 und einem Computerterminal, wobei jedes mit Telekommunikationsmitteln zum Austausch von Informationen über die Auslösung und das Vorhandensein von Schädlingen ausgestattet ist.

5. Verfahren zur Verwendung der Fallenvorrichtung gemäß einem der Ansprüche 1 bis 3, das die folgenden Schritte umfasst:
- Der Sensor zur Erkennung der Auslösung der Falle (6) erkennt die Auslösung der Falle.
- Der Sensor zur Erkennung der Anwesenheit eines Schädlings (7) erkennt, ob ein Schädling anwesend ist oder nicht.
- Wenn kein Schädling gefangen wurde, wird die Falle automatisch und aus der Ferne durch Betätigen des Elektromotors (9) wieder scharf gemacht.

6. Verfahren nach Anspruch 5 zur Verwendung der Vorrichtung nach Anspruch 4, bei dem der Zustand der Falle, ob sie scharf oder ausgelöst ist, über ein Telekommunikationsmodul an das Computerterminal übermittelt wird.

## Claims

1. Pest trap including:
- a support platform (1) of a capture structure (5);
- a hook (3) arranged to hold the capture structure (5) in the "cocked" position;
- a lever (2) arranged for moving the hook (3) to release the capture structure (5) when pressure is applied to said lever;
- a spring (4) arranged to cause the capture structure (5) to rotate around an axis when released,
**characterized by** the fact that the trap additionally includes
- a sensor for detecting the armament or the triggering of the trap (6);
- a sensor for detecting the capture of a pest (7) if the trap is triggered;
- a motor (9) arranged to activate means of resetting the trap if no pests are detected in the triggered trap.

2. A pest trap according to claim 1, wherein the means for rearming the trap comprise an arm (8) rotating about the motor axis arranged to drive the capture structure.

3. A trap according to one of the preceding claims, wherein the sensing sensors are a set of a reed-type switch and a magnet or a magnetic switch and a magnet or an infra-red-type switch and a heat source or an optical-type switch or an acoustic-type switch.

4. Set of the trap according to one of claims 1 to 3 and a computer terminal, each of which is equipped with telecommunications means for exchanging information for the detection of weapons and the presence of pests.

5. A method of using the trap according to any of claims 1 to 3, comprising the following steps:
- the trap armament detection sensor (6) detects the activation of the trap;
- the pest detection sensor (7) detects the presence or absence of a pest;
- If a pest has not been caught, the trap is rearmed automatically and remotely by activating the electric motor (9).

6. The method of use of claim 5 for the use of the assembly according to claim 4, whereby the state of the trap, armed or triggered, is communicated to the computer terminal by means of a telecommunications module.
